# EUROPÄISCHE PATENTSCHRIFT

(11) **EP 1 199 546 B1**
(45) Veröffentlichungstag und Bekanntmachung des Hinweises auf die Patenterteilung: **05.12.2007**
(21) Anmeldenummer: 01123078.6
(22) Anmeldetag: 26.09.2001
(51) Int. Cl.: G01D 21/02, G01D 11/24

(54) **Modulares Mess-System**
Modular measurement system
Système de mesure modulaire

(30) Priorität: 29.09.2000 DE 10049743
(43) Veröffentlichungstag der Anmeldung: 24.04.2002
(73) Patentinhaber: WTW Wissenschaftlich-Technische Werkstätten GmbH & Co. KG, 82362 Weilheim (DE)
(72) Erfinder: Essel, Raimund, 82362 Weilheim (DE); March, Konrad, 82377 Penzberg (DE); Hengel, Robert, 82418 Murnau (DE); Rettig, Ulrich, 82407 Wielenbach (DE)
(74) Vertreter: Zipse Habersack Kritzenberger

(56) Entgegenhaltungen:
- WO-A-99/47935
- DE-U- 9 109 176
- US-A- 5 808 557

## Beschreibung

Die Erfindung betrifft ein modulares Mess-System, das insbesondere für die Messung unterschiedlicher Parameter in der Analyse, insbesondere von Wässern oder Abwässern verwendbar sein soll. Bislang werden in einer Kläranlage unterschiedlichste Sensoren im Zulauf in den unterschiedlichen Verarbeitungsstufen und im Ablauf installiert, die Aufschluss über die einzelnen Wasser- und Abwasserparameter geben sollen, um einen effizienten Betrieb der Kläranlage zu gewährleisten. Die Sensoren verfügen über eine eigene Mess-Elektronik, nachfolgend kurz Messwandler oder Messumformer, und eine Ein-/Ausgabeeinheit, nachfolgend kurz "Terminal", um Betriebsparameter für das Messprogramm des Sensors einzugeben bzw. um Ergebnisse abzurufen oder anzuzeigen. In moderneren Systemen sind die verschiedenen Sensoren über ein Bussystem miteinander verbunden. Das Dokument US-A-5808557 offenbart zum Beispiel solch ein Messsystem.

Es ist nun Ziel der vorliegenden Erfindung, ein Mess-System zu schaffen, das mit einem geringeren Hardware-Aufwand eine fehlerfreie und informative Darstellung der Messergebnisse ermöglicht.

Die Aufgabe wird erfindungsgemäß durch ein Mess-System mit den Merkmalen des Anspruchs 1 gelöst. Vorteilhafte Weiterbildungen der Erfindung sind Gegenstand der Unteransprüche.

Das Mess-System umfasst mindestens eine Mess-Stelle, die z.B. durch einen Sensor wie z.B. eine pH-Elektrode oder dergleichen gebildet sein kann. Vorzugsweise sind jedoch eine Vielzahl von unterschiedlichen Mess-Stellen für verschiedene zu analysierende Parameter vorgesehen. An wenigstens einer Messstelle ist mindestens ein Anschlussmodul zum Anschluss mehrerer Sensoren vorgesehen. Jede Messstelle verfügt hierbei über eine Kennung, die vorzugsweise im Anschlussmodul der Messstelle, z.B. als Information in einem Speicherbaustein vorgesehen ist. Auf das Anschlussmodul ist ein Ein/Ausgabeterminal aufsteckbar, welches über die Kennung in Verbindung mit gespeicherten Daten im Terminal eine Information darüber erhält, an welcher Messstelle es sich befindet und welche Ein/Ausgabefunktionen für welche Sensoren primär zu aktivieren sind. Es ist prinzipiell auch möglich, die Kennung in einem Sensor oder einer Sensorelektronik vorzusehen. Aufgrund der guten Erreichbarkeit ist jedoch das Element vorzugsweise in dem Anschlussmodul vorgesehen.

Die Erfindung wird nachfolgend in Zusammenhang mit der Überwachung der Tätigkeit einer Kläranlage beschrieben. Sie kann jedoch gleichwohl für andere Mess-Zwecke verwendet werden.

In der Regel sind der Messumformer und die Elektronik eines Sensors im Sensorgehäuse untergebracht. Jeder Sensor mit der dazugehörigen Elektronik wird nun an ein Anschlussmodul angeschlossen, das eine Kennung und einen Anschluss für den Sensor aufweist. Vorzugsweise weist das Anschlussmodul ein eigenes Gehäuse auf, das eine Schnittstelle zum Aufstecken eines Terminals zur Eingabe/Ausgabe von Daten aufweist. Die Schnittstelle ist vorzugsweise als Bus ausgebildet. Die im Anschlussmodul vorgesehene Kennung liegt vorzugsweise als Information in einem Speicherelement vor. Die Kennung kann jedoch auch als Schaltmatrix zwischen bestimmten Busleitungen oder in einem Funk- oder IR-Übertragungssystem vorgesehen sein. Beim Aufstecken des Terminals erhält dieses die Kennung vom Anschlussmodul, worauf in dem Terminal bestimmte Eingabe/Ausgabefunktionen für bestimmte Geräte aktiviert werden können. Dies hat den Vorteil, dass ein Terminal auf verschiedene Anschlussmodule aufsteckbar ist, die in der Kläranlage an verschiedenen Messstellen, z.B. am Einlauf, an den Klärbecken und im Ablauf angeordnet sein können. Das Terminal erhält über die Kennung die Information, wo es sich befindet und welche Ein/Ausgabefunktionen für bestimmte Sensoren zu aktivieren sind. Auf diese Weise wird eine Fehlbedienung effektiv unterbunden und die Bedienung der Sensoren wird wesentlich erleichtert.

Vorzugsweise sind mehrere Anschlussmodule über ein Bussystem miteinander verbindbar. Dies erlaubt eine ständige Erweiterung der an einer Messstelle angeordneten Sensoren.

Vorzugsweise sind die Anschlussmodule durch in ihrem Gehäuse angeordnete mechanisch koppelbare Adapterflächen und komplementär dazu ausgebildete Gegenflächen verbindbar, wobei vorzugsweise die mechanische Koppelung mit einem elektrischen Kontakt verbunden wird, wenn im Bereich der Verbindungsflächen elektrische Kontakte für eine elektrische Verbindung der Komponenten ausgebildet sind. Auch das Terminal hat an seiner Rückseite eine derartige Verbindungsfläche. Es ist somit an einem Anschlussmodul oder an einem Anschlussmodulpack vorzugsweise in einer Kontaktierungsstellung verrastbar, aber lösbar gehalten. Auf diese Weise kann ein Terminal auf die Anschlussmodule unterschiedlicher Messstellen aufgesetzt, dort für eine Messung oder Wartung/Eingabe verrastet und danach wieder abgenommen werden. Zudem können aufgrund eines vorzugsweise an dem Terminal ausgebildeten graphischen Displays die von den Sensoren ausgegebenen Daten in unterschiedlichster Form angezeigt oder verrechnet werden. Der Datenaustausch zwischen Terminal und Sensoren erfolgt über das Bussystem in an sich bekannter Weise.

Vorzugsweise hat jedes Gehäuse eines Anschlussmoduls sowohl eine Adapterfläche als auch eine Gegenfläche, was es ermöglicht, mehrere Anschlussmodule einfach zu verbinden und somit eine Messstelle durch zusätzliche Sensoren beliebig zu erweitern. Die Verbindung kann hierbei durch herkömmliche Rastelemente erfolgen oder auch dauerhaft festlegbar sein, z.B. durch Schrauben oder Bajonettbolzen. Dieses modulare Zusammensetzen von mehreren unterschiedlichen Anschlussmodulen ermöglicht eine Mo-dularisierung und beliebige Zusammensetzung und sinnvolle Kombination unterschiedlicher Sensoren, wobei die Eingabe und Ausgabe all dieser zusammengefassten Sensoren der Messstelle durch ein aufgestecktes Terminal realisiert werden kann. Über dieses können Betriebsparameter in die Messumformer unterschiedlicher Sensoren eingegeben werden und die gemessenen Daten dieser unterschiedlichen Sensoren kann entweder einzeln oder bereits in einer sinnvollen Kombination angezeigt werden, was eine sehr viel bessere Darstellung von Parametern ermöglicht, die aus den Daten unterschiedlicher Mess-Stellen gebildet bzw. errechnet werden müssen. Die Datenübertragung zwischen den Anschlussmodulen und dem Terminal erfolgt hierbei vorzugsweise über ein Bussystem, das auf die im Bereich der Adapterflächen und Gegenflächen vorgesehenen elektrischen Kontakte geführt ist. Die Daten zwischen den unterschiedlichen Sensoren und dem Terminal können hierbei in standardisierter und digitaler Form übertragen werden. Vorzugsweise können hier auch Peripheriegeräte wie z.B. Netzteile, Speicherbauteile, Relais etc. in einem eigenen Gehäuse mit entsprechend ausgebildeten Adapter- und Gegenflächen angeordnet und mit dem modularen System verbindbar sein. Hiermit lässt sich der Hardware-Aufwand für das Gesamtsystem abermals reduzieren, da nun für einen zusammengesetzten Pack mehrerer Anschlussmodule (und mit diesen verbundenen Sensoren) nur ein einziges Netzteil erforderlich ist, das alle Sensoren mit Strom versorgt.

Somit kann für eine Vielzahl von Messstellen ein einziges Terminal vorgesehen sein und das Terminal muss nicht ständig dem Wettereinfluss ausgesetzt sein. Das Terminal weiß dabei anhand der Kennung, an welcher Messstelle in der Kläranlage es sich befindet.

Vorzugsweise hat jedes Gehäuse die Adapterfläche und Gegenfläche auf seiner Vorder- und Rückseite, so dass die Gehäuse mehrerer Anschlussmodule in Tiefenrichtung miteinander verbindbar sind. Das Terminal wird dann auf der Vorderseite des Packs aufgesetzt. Eine derartige Kombination mehrerer Anschlussmodule mit fest verschraubtem oder abnehmbar aufgesetztem Terminal ist überall montierbar, z.B. an der Wand, in einer Schalttafel, am Feld, unter einem Schutzdach oder auf einer Hutschiene. Die Anschlussmodule sind beliebig kombinierbar, da sie alle über die identische Adapterfläche und Gegenfläche und vorzugsweise über ein standardisiertes Bussystem mit einheitlichem Protokoll verfügen. Das Handling, z.B. Lagerhaltung und Herstellung, des gesamten Systems wird überdies erheblich vereinfacht, wenn die Gehäuse der Anschlussmodule vorzugsweise eine standardisierte Größe aufweisen.

Vorzugsweise ist das Gehäuse des Anschlussmoduls mit einem Klappscharnier versehen, um es einfach öffnen zu können. Hierbei werden die vor dem Gehäuse und hinter dem Gehäuse angeschraubten Module gegeneinander verschwenkt. Dies ermöglicht es, ein Modul zu warten oder zu erweitern bzw. zu reparieren, auch wenn dieses Anschlussmodul mitten in einer größeren Anzahl von miteinander verbundenen Gehäusen angeordnet ist. Das Gesamtsystem ist somit auch äußerst wartungsfreundlich. Die Anordnung des Klappscharniers in dem Gehäuse zwischen Adapterfläche und Gegenfläche ermöglicht das Wegklappen der vorne befindlichen Module bzw. Terminals, so dass die Arbeit an dem zu bearbeitenden Modul nicht behindert wird.

Selbstverständlich können die Adapter- und Gegenflächen auch an den Seitenflächen oder Ober- und Unterseiten des Gehäuses angeordnet sein. Die Stapelung mehrerer Anschlussmodulgehäuse in Tiefenrichtung wird jedoch als vorteilhaft empfunden, da man auf diese Weise ein homogenes Gesamtbild erhält, das an der Vorderseite nur durch die Adapterfläche für das Terminal bzw. durch das Terminal selbst gebildet wird.

Vorzugsweise sind die Adapter- und Gegenfläche mit zueinander komplementären Passungen versehen, die ein Verschieben der Flächen relativ zueinander verhindern. Die elektrischen Kontakte sind im Bereich dieser Flächen vorzugsweise als Federkontakte oder Gleit- bzw. Friktionskontakte ausgebildet, die beim mechanischen Verbinden zweier Gehäuse selbsttätig einen sicheren elektrischen Kontakt herstellen.

Die Erfindung wird nachfolgend beispielsweise anhand der schematischen Zeichnung beschrieben. In dieser zeigen:
- Fig. 1: eine perspektivische Ansicht der Zusammensetzung eines Systems mit drei verschiedenen Anschlussmodulen und einem Terminal,
- Fig. 2: eine Ansicht gemäß Figur 1 mit zusammengesetzten Anschlussmodulen,
- Fig. 3: eine Aufsicht auf eine Adapterfläche eines Anschlussmodulgehäuses aus den Figuren 1 und 2 und
- Fig. 4: eine Seitenansicht auf ein aufgeklapptes Anschlussmodulgehäuse.

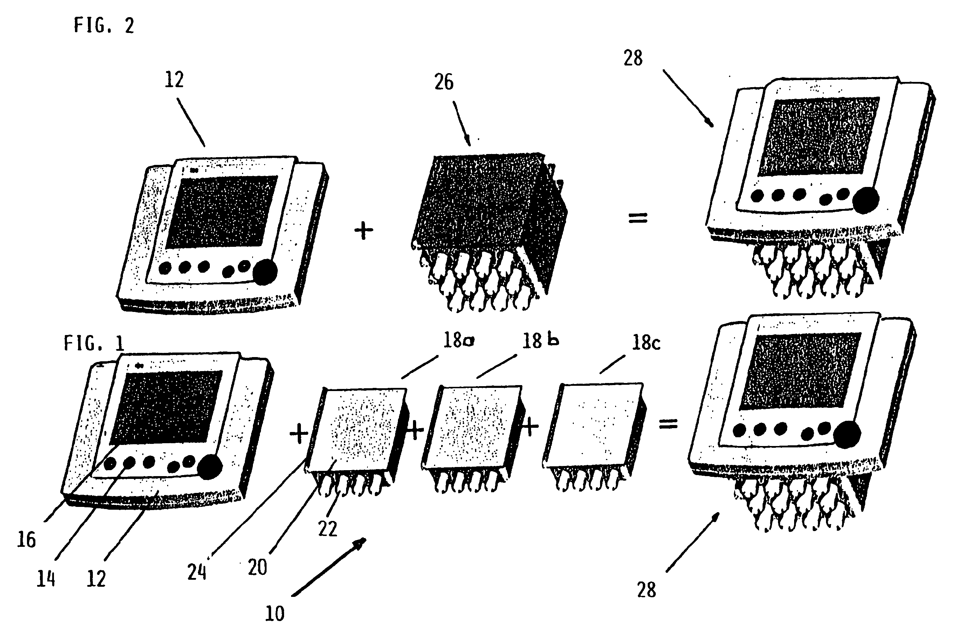

Figur 1 zeigt ein Mess-System 10, bestehend aus einem Terminal 12 mit Eingabe-Elementen 14 und einem Display 16, einem ersten Anschlussmodul 18 mit einem Gehäuse 20, in dem ein elektrisches Speicherbauelement enthalten ist, das eine Kennung für das Terminal aufweist mit Anschlüssen 22 für Sensoren und einem Klappscharnier 24, mit dem sich die Vorderseite des Gehäuses aufklappen lässt. Das System umfasst ferner zwei weitere Anschlussmodule 18 b und 18 c für andere Sensoren z.B. für Nitratmessung, Sauerstoffmessung oder pH-Messung. An ihrer Vorder- und Rückseite weisen die Gehäuse 20 der Anschlussmodule 18 a bis 18 c jeweils eine Adapter- und eine Gegenfläche auf, durch die die drei Anschlussmodule 18 a bis 18 c in Art eines Gehäusestapels 26 (Figur 2) verbunden werden können. Das Terminal 12 weist auf seiner Rückwand ebenfalls eine Adapter- oder Gegenfläche auf, mit der das Terminal 12 auf der Vorderseite des Anschlussmodulpacks 26 festgelegt werden kann. Das Terminal kann dabei entweder fest verschraubt werden oder durch eine lösbare Rastverbindung aufgesetzt und nach Gebrauch wieder entnommen werden. Nach Zusammenstecken der einzelnen Anschlussmodule 18 a bis 18 c zu einem Anschlussmodulstapel 26 und Verbinden des Stapels 26 mit dem Terminal 12 erhält man ein modular zusammengesetztes Gesamtsystem 28, im vorliegenden Fall mit drei verschiedenen Anschlussmodulen und einem Terminal zur Eingabe und Ausgabe der Daten von den verschiedenen Sensoren.

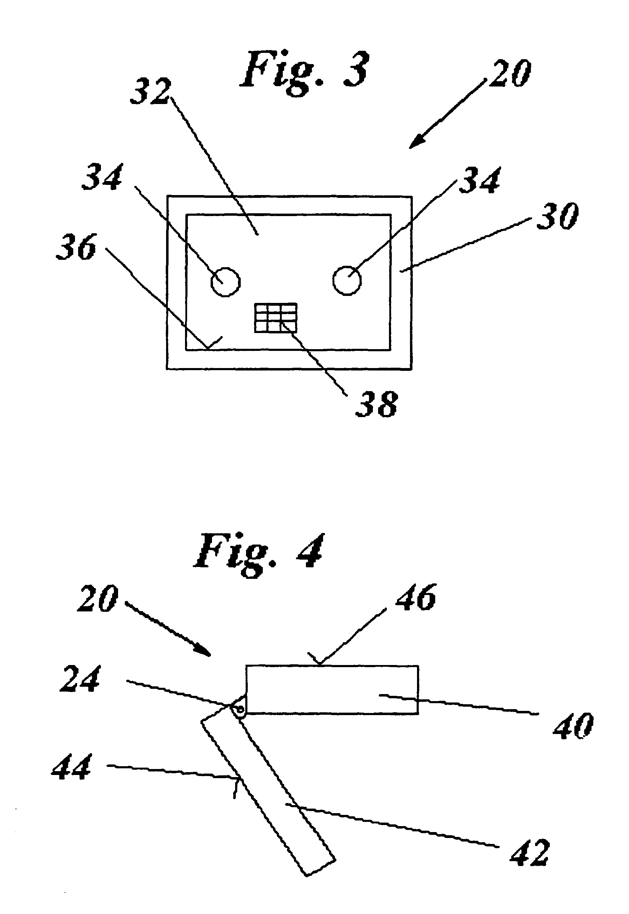

Figur 3 zeigt detaillierter die nur schematisch dargestellte Vorderseite eines Gehäuses 20. Die Vorderseite umfasst einen Rahmen 30, eine relativ zum Rahmen 30 zurückgesetzte Fläche 32, die mit der Rückseite eines Gehäuses 20 korrespondiert. Rechts und links in der Mitte der zurückgesetzten Fläche 32 sind zwei Bohrungen 34 vorgesehen, durch welche sich mehrere Gehäuse 20 bzw. mehrere Gehäuse 20 und eine Montagerückwand miteinander verschrauben lassen. Die Rückseite eines Gehäuses 20 liegt an der Innenkante 36 des Rahmens 30 an und wird somit nach Verschraubung an den Stellen 34 sicher an der Gehäusevorderwand gehalten. Auf der zurückgesetzten Fläche 32 sind elektrische Federkontakte 38 ausgebildet, die eine sichere Kontaktierung eines durch alle Gehäuse 20 laufenden Bussystems bewirken.

Figur 4 zeigt in einer Seitenansicht ein aufgeklapptes Gehäuse 20 mit einem Rückteil 40 und einem Vorderteil 42, die über ein Klappscharnier 24 miteinander verbunden sind. Das Gehäuse 20 befindet sich gerade im aufgeklappten Zustand, in dem auf eine eventuell im Inneren des Gehäuses 20 befindliche Anschlusselektronik bzw. auf einen eine Kennung für das Terminal 12 enthaltenden Speicherbaustein zugegriffen werden kann. Auf der Vorderseite 44 des Gehäuses ist die in Figur 3 dargestellte Adapterfläche ausgebildet, während auf der Rückseite 46 des Gehäuses die komplementär ausgebildete Gegenfläche angeordnet ist. Auch bei aneinandergeschraubten Gehäusen 20 kann jedes Gehäuse aufgeklappt und somit auf jede Messelektronik auch bei zusammengesetztem Gesamtsystem 28 (Fig. 1 und 2) zugegriffen werden.

Die Anzahl der miteinander verbindbaren Module ist lediglich durch die mechanische Stabilität der Gehäuse, der Montage und die Handhabbarkeit begrenzt. So können z.B. auch 10 Module miteinander gekoppelt werden, wenngleich auch Koppelungen von eher wenigeren Messwandlern, z.B. 5 mit Peripheriegeräten, Netzteil und Terminal als vorteilhaft erscheinen.

Durch die Kennung ist das Terminal in der Lage, trotz völlig unterschiedlicher Sensorkombinationen an den unterschiedlichen Meßstellen genau die Ein/Ausgabefunktionen anzubieten, die für die an der jeweiligen Messstelle vorliegende Sensorkombination zugeschnitten ist. Selbstverständlich ist es jedoch auch möglich, auf andere mit dem Bussystem verbundene Sensoren zuzugreifen.

## Patentansprüche

1. Modulares Messsystem (10) umfassend
- wenigstens eine Messstelle mit Sensoren,
- mindestens ein an der Messstelle vorgesehenes, vorzugsweise in einem Gehäuse (20) angeordnetes Anschlussmodul (18a, 18b, 18c) zum Anschluss von Sensoren,
- eine Ein/Ausgabeeinheit (12)
**dadurch gekennzeichnet, daß**
- die Ein/Ausgabeeinheit (12) auf das Anschlussmodul (18a, 18b, 18c) aufsteckbar ist,
- das Anschlussmodul (18a, 18b, 18c) wenigstens eine Übertragungsschnittstelle zum Verbinden von Sensoren und einer Ein/Ausgabeeinheit (12) aufweist,
- in dem Anschlussmodul (18a, 18b, 18c) oder in den Sensoren wenigstens ein elektrisches Speicherelement vorhanden ist, welches über eine Kennung Informationen an die Ein/Ausgabeeinheit (12) weitergibt,
- und dass die Elektronik für die Funktionen der Ein/Ausgabeeinheit (12) in Abhängigkeit von den Kennungsinformationen steuerbar ist.

2. Modulares Messsystem nach Anspruch 1, umfassend
- wenigstens eine an dem Gehäuse (20) angeordnete Adapterfläche (32),
- wenigstens eine an der Eingabe/Ausgabeeinheit (12) angeordnete und zu der Adapterfläche komplementär ausgebildete Gegenfläche.

3. Messsystem nach Anspruch 2,
bei dem im Bereich jeder Kontakt- und Gegenfläche zueinander komplementäre elektrische Kontakte (38) vorgesehen sind.

4. Messsystem nach Anspruch 3,
bei dem jedes Anschlussmodul einen Busanschluss aufweist, der auf die elektrischen Kontakte (38) des Gehäuses geführt ist.

5. Messsystem nach Anspruch 2, 3 oder 4,
bei dem an jedem Gehäuse (20) sowohl eine Adapterfläche als auch eine Gegenfläche ausgebildet ist.

6. Messsystem nach Anspruch 5,
bei dem das Gehäuse (20) zum Öffnen ein Klappscharnier (24) aufweist, so dass die Adapterfläche (44) und Gegenfläche (46) des Gehäuses gegeneinander verschwenkbar sind.

7. Messsystem nach einem der Ansprüche 5 oder 6,
bei dem die Adapter- und Gegenfläche (44,46) an der Vorder- und Rückseite des Gehäuses (20) ausgebildet sind.

8. Messsystem nach einem der Ansprüche 2 bis 7,
bei dem die Adapter- und Gegenfläche zweier Gehäuse zueinander komplementäre Passungen aufweisen.

9. Messsystem nach einem der vorhergehenden Ansprüche,
bei dem die Adapter- und Gegenfläche zweier Gehäuse lösbar gegeneinander festlegbar, z.B. verschraubbar sind.

10. Messsystem nach einem der vorhergehenden Ansprüche,
bei dem Peripheriegeräte, wie z.B. Netzteile, Speicherelemente etc. vorgesehen sind, die ein Gehäuse mit einer Übertragungsschnittstelle, insbesondere Adapter- und/oder Gegenfläche mit elektrischen Kontakten, aufweisen.

11. Messsystem nach einem der vorhergehenden Ansprüche,
bei dem das die Kennung aufweisende Element ein Speicherbaustein ist.

12. Messsystem nach einem der vorhergehenden Ansprüche,
bei dem das Element in wenigstens einem Anschlussmodul angeordnet ist.

## Claims

1. A modular sensing system (10) comprising
- at least one sensing location with sensors,
- at least one junction module (18a, 18b, 18c) provided at the sensing location, preferably in a housing (20) for connecting the sensors,
- an input/ output unit (12),
**characterized in that**
- the input/ output unit (12) can be plugged into the junction module (18a, 18b, 18c),
- the junction module (18a, 18b, 18c) comprises at least one communication interface for connecting sensors and an input/ output unit (12),
- in the junction module (18a, 18b, 18c) or in the sensors at least one electric memory element is provided for communicating, via an ID, information to the input/output unit (12),
- and that the electronics for the functions of the input/ output unit (12) is controllable as a function of the ID information.

2. The modular sensing system as set forth in claim 1 comprising
- at least one adapter surface (32) arranged on the housing (20)
- at least one mating surface arranged on the input/output unit (12) and configured complementary to the adapter surface.

3. The sensing system as set forth in claim 2,
wherein electric contacts (38) are provided complementary to each other in the region of each contacting and mating surface.

4. The sensing system as set forth in claim 3,
wherein each junction module comprises a bus connection communicating with the electric contacts (38) of the housing.

5. The sensing system as set forth in claims 2, 3 or 4,
wherein configured at each housing (20) is both an adapter surface and a mating surface.

6. The sensing system as set forth in claim 5,
wherein the housing (20) comprises for opening a flip-hinge (24) so that the adapter surface (44) and mating surface (46) of the housing can be pivoted relative to each other.

7. The sensing system as set forth in any of the claims 5 or 6,
wherein the adapter and mating surface (44, 46) are configured on the front side and rear side of the housing (20).

8. The sensing system as set forth in any of the claims 2 to 7,
wherein the adapter and mating surface of two housings comprise locators complementary to each other.

9. The sensing system as set forth in any of the preceding claims
wherein the adapter and mating surface of two housings are definable each relative to the other e.g. by screw attachments.

10. The sensing system as set forth in any of the preceding claims,
wherein the peripheral hardware such as e.g. power supplies, memory elements etc are provided comprising a housing featuring a communication interface, particularly adapter and/ or mating surface with electric contacts.

11. The sensing system as set forth in any of the preceding claims,
wherein the element featuring the ID is a memory module,

12. The sensing system as set forth in any of the preceding claims,
wherein the element is arranged in at least one junction module.

## Revendications

1. Système de mesure modulaire (10), comprenant
- au moins un point de mesure avec des capteurs,
- au moins un module de raccordement (18a, 18b, 18c) prévu au point de mesure préférentiellement disposé dans un boîtier (20) pour le raccordement de capteurs,
- une unité d'entrée/de sortie (12)
**caractérisé par le fait que**
- l'unité d'entrée/de sortie (12) est emboîtable sur le module de raccordement (18a, 18b, 18c),
- le module de raccordement (18a, 18b, 18c) comporte au moins une interface de transmission destinée au raccordement de capteurs et d'une unité d'entrée/de sortie (12),
- au moins un élément de mémorisation électrique est disponible dans le module de raccordement (18a, 18b, 18c) ou dans les capteurs, qui transmet des informations à une unité d'entrée/de sortie (12) par l'intermédiaire d'une identification,
- et que l'électronique pour les fonctions de l'unité d'entrée/de sortie (12) est réglable en fonction des informations d'identification.

2. Système de mesure modulaire selon la revendication 1, comprenant
- au moins une surface d'adaptation (32) disposée au niveau du boîtier (20),
- au moins une contreface disposée au niveau de l'unité d'entrée/de sortie (12) et réalisée de manière complémentaire par rapport à la surface d'adaptation.

3. Système de mesure selon la revendication 2,
dans lequel des contacts électriques (38) complémentaires les uns par rapport aux autres sont prévus dans la zone de chaque surface de contact et contreface.

4. Système de mesure selon la revendication 3,
dans lequel chaque module de raccordement présente une connexion de bus guidée sur les contacts électriques (38) du boîtier.

5. Système de mesure selon la revendication 2, 3 ou 4,
dans lequel une surface d'adaptation ainsi qu'une contreface sont réalisées au niveau de chaque boîtier (20).

6. Système de mesure selon la revendication 5,
dans lequel le boîtier (20) présente pour l'ouverture une charnière rabattable (24), de telle sorte que la surface d'adaptation (44) et la contreface (46) du boîtier pivotent l'une contre l'autre.

7. Système de mesure selon l'une des revendications 5 ou 6,
dans lequel la surface d'adaptation et la contreface (44, 46) sont réalisées au niveau de la face avant et arrière du boîtier (20).

8. Système de mesure selon l'une des revendications 2 à 7,
dans lequel la surface d'adaptation et la contreface de deux boîtiers présentent des ajustements complémentaires l'une par rapport à l'autre.

9. Système de mesure selon l'une des revendications précédentes,
dans lequel la surface d'adaptation et la contreface de deux boîtiers peuvent se fixer, par ex. par vissage, l'une contre l'autre de façon amovible.

10. Système de mesure selon l'une des revendications précédentes,
dans lequel sont prévus des périphériques, comme par ex. des blocs d'alimentation, des éléments de mémorisation, qui comportent un boîtier muni d'une interface de transmission, en particulier une surface d'adaptation et/ou une contreface munies de contacts électriques.

11. Système de mesure selon l'une des revendications précédentes,
dans lequel l'élément comportant l'identification est un module de mémoire.

12. Système de mesure selon l'une des revendications précédentes,
dans lequel l'élément est disposé dans au moins un module de raccordement.
